# FASCICULE DE BREVET EUROPEEN

(11) **EP 4 061 663 B1**
(45) Date de publication et mention de la délivrance du brevet: **06.09.2023**
(21) Numéro de dépôt: 20799772.7
(22) Date de dépôt: 15.10.2020
(51) Int. Cl.: B60K 11/02, B60K 1/00, B60K 11/08

(54) **PROCÉDÉ DE DIAGNOSTIC THERMIQUE POUR LA DÉTECTION D'UNE ANOMALIE DE FONCTIONNEMENT D'UN CIRCUIT ÉLECTRIQUE DE VÉHICULE AUTOMOBILE**
THERMISCHES DIAGNOSEVERFAHREN ZUR FESTSTELLUNG EINER ANOMALIE DER FUNKTION EINES ELEKTRISCHEN SCHALTKREISES EINES KRAFTFAHRZEUGS
METHOD OF THERMAL DIAGNOSIS FOR THE DETECTION OF AN ABNORMALITY OF THE FUNCTIONING OF AN ELECTRIC CIRCUIT OF A MOTOR VEHICLE

(30) Priorité: 20.11.2019 FR 1912976
(43) Date de publication de la demande: 28.09.2022
(73) Titulaire: PSA Automobiles SA, 78300 Poissy (FR)
(72) Inventeur: MIQUEL, Claire, 95220 HERBLAY (FR); ZUMI, Michel, 92600 ASNIERES SUR SEINE (FR); NEDELEC, Yann, 78410 FLINS SUR SEINE (FR)
(86) Numéro de dépôt international: PCT/FR2020/051833
(87) Numéro de publication internationale: WO 2021/099703

(56) Documents cités:
- FR-A1- 2 966 875
- US-A1- 2014 062 228
- US-A1- 2019 061 462

## Description

La présente invention concerne un procédé de diagnostic d'une anomalie de fonctionnement d'un système de refroidissement d'un circuit électrique de propulsion dans un véhicule, le diagnostic élaboré servant de diagnostic de surveillance de la performance globale du système de refroidissement du circuit électrique dit alors circuit basse température. La présente invention s'applique particulièrement au niveau du contrôle-commande des véhicules automobiles hybrides ou électriques.

Une ou des machines électriques sont utilisées pour assurer la propulsion d'un véhicule automobile en mode électrique et sont alimentées par une batterie haute tension via des onduleurs. Ces circuits électriques, ainsi que la batterie étant fortement sollicités, la température augmente par effet joule d'où la nécessité de mettre en place un système de refroidissement par fluide caloporteur adapté.

L'ensemble est piloté à partir d'un ou plusieurs calculateurs regroupés notamment dans une unité électronique de contrôle de l'ensemble, cette unité électronique pouvant communiquer avec d'autres unités électroniques de contrôle embarquées dans le véhicule automobile.

Le système de gestion thermique permet d'assurer le refroidissement de la ou des machines électriques et d'un ou des éléments électriques associées aux machines électriques réalisant l'électronique de puissance. L'état thermique de ces éléments a un rôle direct sur les performances et la disponibilité du circuit électrique pour la propulsion, la récupération électrique et la charge électrique du véhicule.

L'objectif est d'évacuer le flux thermique généré par les différents éléments présents sur le circuit électrique basse température.

Un véhicule automobile hybride ou électrique comprend au moins une machine électrique ou moteur électrique pour la propulsion du véhicule, la ou les machines électriques étant intégrées dans un ou des circuits électriques comprenant des éléments électriques comme un ou des onduleurs, une batterie et un dispositif de rechargement d'une batterie, notamment pour un train avant ou un train arrière.

Actuellement, pour le développement de véhicules automobiles hybrides, une nouvelle réglementation impose un diagnostic d'efficacité globale du système de refroidissement basse température précédemment décrit.

Par conséquent, le problème à la base de l'invention est, dans un véhicule automobile, pour un ensemble d'un circuit électrique comprenant au moins une machine électrique et un système de refroidissement à fluide caloporteur de mettre à disposition un diagnostic fonctionnel afin de répondre à cette exigence réglementaire concernant l'efficacité globale du système de refroidissement.

En particulier, la gestion thermique et les méthodes de mesure et de traitement des informations thermiques sont essentielles. On connait de l'état de la technique le document brevet déposé par la demanderesse FR3055584A1 décrivant un procédé d'estimation d'une température ambiante dans un environnement d'un organe disposé sous un capot. Selon ce procédé, une estimation de la température ambiante se faisant au moins en fonction d'une température directement en aval de la façade de refroidissement. Quand la vitesse de flux d'air est sensiblement nulle, l'estimation de la température ambiante dans l'environnement de l'organe se fait aussi en fonction d'une température du moteur et du régime du moteur. On connait également le document brevet KR20180114411A décrivant une unité de collecte d'informations pour collecter la température d'un composant électronique situé à l'intérieur d'un véhicule automobile, et d'un second capteur situé à l'extérieur de l'automobile afin de piloter les volets de refroidissement. Un système de refroidissement par fluide caloporteur dans un véhicule électrique est connu du document US 2014/062228 A1.

Ces solutions reposent sur la mesure de capteurs électroniques. Cependant, ces capteurs peuvent être défaillants et fournir des informations erronées pouvant nuire à la gestion thermique des systèmes électriques et amener les systèmes dans une situation thermique critique.

Ainsi, il est essentiel également de mettre en place un système de surveillance performant capable de détecter une surchauffe, une panne ou toute anomalie d'un des éléments électroniques de contrôle, notamment un capteur, et ce de manière anticipée, afin d'éviter une défaillance critique en roulage.

Plus précisément, l'invention concerne un procédé de diagnostic d'une anomalie de fonctionnement d'un système de refroidissement par fluide caloporteur dans un véhicule automobile d'un circuit électrique comprenant au moins une machine électrique de propulsion du véhicule, une batterie prévue pour l'alimentation de la machine électrique, le système de refroidissement comportant un premier circuit de refroidissement de la machine électrique et un deuxième circuit de refroidissement de ladite batterie, le procédé comportant une étape de mesure d'une première et d'une deuxième température de fluide caloporteur dans respectivement les premier et deuxième circuits de refroidissement et une étape de détermination d'un seuil inférieur de température. Selon l'invention, le procédé comporte en outre :
- Une étape d'estimation d'une température pondérée qui est déterminée à partir d'un calcul barycentrique des première et deuxième températures mesurées,
- Une étape de détermination du seuil consistant à calculer le minimum entre, d'une part, une température extérieure dans un environnement du véhicule et, d'autre part, la deuxième température,
- Une étape de comparaison de la température pondérée avec ledit seuil,
- En cas de détection que la température pondérée est inférieure audit seuil, l'activation d'une étape de diagnostic (200) d'anomalie de fonctionnement du système de refroidissement.

Selon une variante, l'activation de l'étape de diagnostic d'anomalie est exécutée en cas de détection en outre d'une activation d'une pompe de circulation du fluide caloporteur du deuxième circuit de refroidissement.

Il est établi des conditions préalables de mise en oeuvre du diagnostic, les conditions préalables étant au moins des températures stables depuis une durée supérieure à des seuils de temps minimal prédéterminés, les températures étant la première température, la deuxième température, la température extérieure.

Selon une variante, l'étape de diagnostic s'effectue si la détection reste active durant une temporisation d'une durée prédéterminée.

Il est envisagé selon l'invention un procédé de protection d'un circuit électrique refroidi par un système de refroidissement par fluide caloporteur dans un véhicule automobile, remarquable en ce qu'il intègre un procédé de diagnostic selon l'un quelconque des modes de réalisation précédent, quand il est effectué un diagnostic d'anomalie du système de refroidissement, la température pondérée étant inférieure audit seuil, il est effectué une augmentation d'un débit du fluide dans le système de refroidissement avec une émission d'une alerte à destination du conducteur du véhicule et une suspension de tout rechargement électrique du circuit comme un freinage récupératif d'énergie.

Selon une variante du procédé de protection, quand l'augmentation du débit de fluide ou la suspension de tout rechargement électrique du circuit ne sont pas suffisantes pour ramener la température pondéré au-dessus dudit seuil, il est effectué, pour un véhicule hybride, un arrêt au moins partiel de ladite au moins une machine électrique et un redémarrage d'un moteur thermique pour une propulsion du véhicule hybride, ou, pour un véhicule électrique, à une émission d'une alerte urgente d'arrêt du véhicule automobile à destination du conducteur du véhicule automobile et/ou à un arrêt au moins partiel d'au moins une machine électrique du circuit quand plusieurs machines électriques sont présentes dans le circuit.

Il est prévu un ensemble, dans un véhicule automobile, d'un circuit électrique et de son système de refroidissement par fluide caloporteur comportant au moins un organe de mesure ou d'estimation d'une première et deuxième température de fluide, le circuit électrique comprenant au moins une machine électrique de propulsion du véhicule et au moins un élément électrique associé à ladite au moins une machine électrique à refroidir, l'ensemble comprenant une unité électronique de contrôle en charge de son fonctionnement et étant protégé par un procédé de protection selon l'un quelconque des modes de réalisation précédent, dans lequel l'unité électronique de contrôle comprend des moyens de réception de la première et deuxième température de fluide mesurées, des moyens d'estimation de la température pondérée, des moyens de mémorisation du seuil, des moyens de comparaison de la température pondérée avec le seuil, des moyens d'établissement d'un diagnostic d'une anomalie du système de refroidissement et, dans ce cas, des moyens d'augmentation du débit de fluide dans le système de refroidissement, des moyens d'émission d'une alerte visuelle ou sonore à destination du conducteur et des moyens de suspension de tout rechargement électrique du circuit comme un freinage récupératif d'énergie.

Selon une variante de l'ensemble, l'unité électronique de contrôle de l'ensemble comprend des moyens d'émission d'une demande d'arrêt au moins partiel de ladite au moins une machine électrique vers une unité électronique de contrôle principal d'un véhicule automobile hybride avec des moyens de remise en marche du moteur thermique du véhicule ou des moyens de demande urgente d'arrêt au moins partiel de ladite au moins une machine électrique pour un véhicule automobile électrique.

Selon une variante de l'ensemble ledit au moins un élément électrique est sélectionné parmi les éléments suivants pris unitairement ou en combinaison : au moins un onduleur, au moins un dispositif de rechargement électrique embarqué dans le véhicule automobile, au moins un convertisseur de courant continu haute tension en courant continu basse tension et au moins une batterie, le système de refroidissement comprenant au moins un premier circuit de refroidissement dudit au moins un élément électrique comportant une première pompe et au moins un radiateur faisant partie ou non d'un groupe moto-ventilateur avec des volets d'aération pilotés, l'unité électronique de contrôle commandant des moyens d'actionnement des volets d'aération en une position d'ouverture maximale quand les moyens d'augmentation du débit de fluide sont activés, et un deuxième circuit de refroidissement de la batterie comportant un circuit principal de régulation thermique, de type boucle à cycle thermodynamique, un circuit secondaire comprenant une deuxième pompe et un échangeur thermique permettant l'échange d'énergie calorifique entre le circuit principal et le circuit secondaire.

Il est également prévu un véhicule automobile électrique ou hybride, comportant un ensemble d'un circuit électrique et de son système de refroidissement par fluide caloporteur selon l'un quelconque des modes de réalisation précédent.

L'invention assure une meilleure protection contre la surchauffe des composants tels que les onduleurs avant et arrière, la machine électrique arrière et le chargeur embarqué et convertisseur de tension, et à répondre aux exigences réglementaires relatives aux diagnostics des chargeurs embarqués. La détection sur un seuil inférieur, calculé à la fois sur la base de la température du circuit de refroidissement batterie et sur la base de la température du circuit de refroidissement des éléments électriques permet de consolider les données thermiques et détecter une anomalie pouvant affecter un capteur de température. Le procédé met en oeuvre une stratégie de détection permettant de détecter une incohérence et une stratégie de protection préventive.

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels :

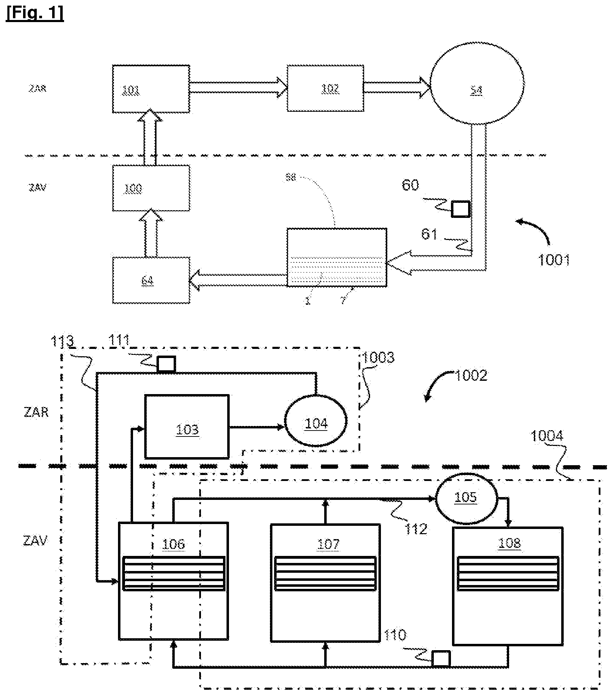

[Fig.1] est une représentation schématique d'un ensemble d'un circuit électrique de propulsion comprenant au moins une machine électrique et une batterie haute tension et de son système de refroidissement par fluide caloporteur, le procédé de diagnostic selon la présente invention étant applicable à un tel ensemble.

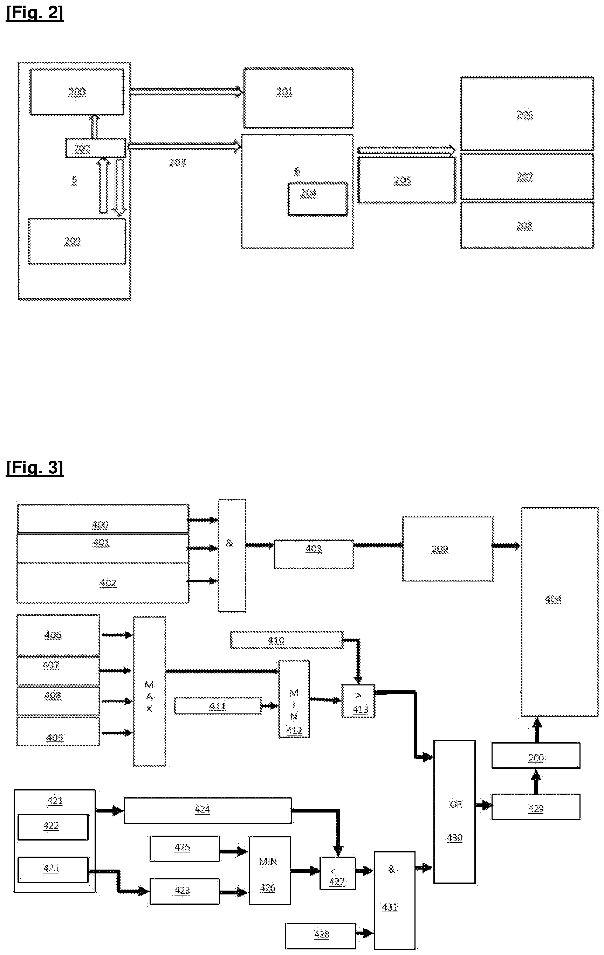

[Fig.2] est une représentation schématique d'une architecture d'un ensemble d'un circuit électrique comportant au moins une machine électrique de propulsion et une batterie haute tension et de son système de refroidissement par fluide caloporteur dans un véhicule automobile avec détail des étapes d'une forme de réalisation d'un procédé de protection du circuit électrique selon la présente invention.
[Fig.3] est une représentation d'un logigramme d'une forme de réalisation selon la présente invention d'un procédé de protection d'un circuit électrique comportant au moins une machine électrique de propulsion et une batterie haute tension dans un véhicule automobile, le circuit étant refroidi par un système de refroidissement par fluide caloporteur.

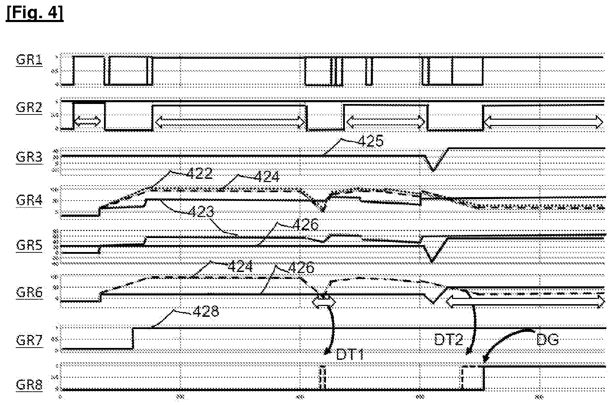

[Fig.4] illustre huit graphiques parmi lesquels la température d'air extérieur, de fluide caloporteur, la température pondérée et le seuil inférieur dans divers cas de figure de mise en oeuvre du procédé selon la présente invention.

La figure 1 illustre un exemple non limitatif d'un ensemble d'un circuit électrique de propulsion, comportant une machine électrique motrice 54 et une batterie haute tension 103, doté d'un système de refroidissement et apte à mettre en oeuvre le procédé de diagnostic d'une anomalie de fonctionnement du système de refroidissement et un procédé de protection des circuits électrique selon l'invention. Dans cet exemple non limitatif, la machine électrique motrice 54 est montée sur un train arrière du véhicule positionné dans une zone arrière ZAR du véhicule. Le système de refroidissement comprend un premier circuit 1001, désigné par circuit basse température, et un deuxième circuit 1002 désigné par circuit très basse température. Chacun de ces circuits est agencé entre la zone arrière ZAR et une zone avant ZAV du véhicule.

Le premier circuit 1001 comprend successivement un radiateur 58 positionné dans la zone avant ZAV du véhicule et pouvant faire partie d'un groupe moto-ventilateur 7 équipé d'un système de volets obturateurs 1 pilotés pour une admission plus ou moins grande d'air extérieur au véhicule vers le radiateur 58 basse température.

Une pompe de circulation 64 de fluide permet de faire circuler le liquide caloporteur du radiateur 58 vers au moins un élément électrique 100 à 102, ici un onduleur 100 en zone avant ZAV du véhicule, puis vers un convertisseur de courant 101, puis vers un onduleur 102 en zone arrière ZAR du véhicule, puis vers la machine électrique de traction 54 pouvant être située en zone arrière ZAR du véhicule, avant de revenir dans le radiateur 58.

Par convertisseur 101, il est entendu soit un dispositif de rechargement embarqué pour une batterie haute tension, couramment désigné par l'homme du métier sous l'acronyme OBC pour « On Board Charger » en anglais, soit un convertisseur de courant continu haute tension en courant continu basse tension utilisé pour la conversion d'une tension entre une batterie haute tension comme une batterie de traction et une batterie basse tension comme une batterie de servitude ou soit un dispositif de rechargement et un convertisseur groupés. La dénomination convertisseur peut aussi inclure une batterie.

Le premier circuit 1001 comporte en outre un moyen de mesure 60 de la température du fluide caloporteur 61, tel un capteur, ou organe d'estimation de température. Ce capteur 60 peut être positionné en zone avant ZAV ou zone arrière ZAR du circuit 1001.

La séparation entre la zone avant ZAV et la zone arrière ZAR du véhicule est schématisée par le trait en pointillés, le radiateur 58 étant dans la zone avant ZAV du véhicule.

Une unité électronique de contrôle peut commander le dispositif de propulsion électrique comprenant les équipements de puissance qui sont dans cet exemple l'onduleur 100 à l'avant du véhicule, le convertisseur de courant 101, l'onduleur 102 à l'arrière du véhicule, et la machine électrique de traction 54.

Une unité électronique de contrôle, associée ou non à l'unité électronique précédemment mentionnée, peut commander le système de refroidissement du circuit électrique de propulsion en contrôlant les équipements de commande de refroidissement qui dans cet exemple sont la pompe de circulation 64, le groupe moto-ventilateur 7 et le système de volets obturateurs 1. L'unité ou les unités électroniques de contrôle peuvent être, par exemple, embarquées dans l'un des équipements de puissance à refroidir, notamment le convertisseur de courant 101. En variante, le groupe moto-ventilateur 7 et le système de volets obturateurs 1 peuvent être contrôlés par une unité électronique de contrôle différente, par exemple une unité de contrôle moteur, contrôlant, le cas échéant, un moteur thermique dans le cas d'un véhicule hybride et déterminant, entre autres, une répartition de couple moteur entre la ou les machines électriques et le moteur thermique.

Le deuxième circuit 1002 comporte un circuit principal 1004 de régulation thermique du véhicule, de type boucle à cycle thermodynamique. Typiquement, une telle boucle comporte au moins un compresseur 105, un condenseur 108, et un évaporateur 107 et dans laquelle circule un fluide caloporteur et est agencée pour puiser et pour fournir de l'énergie calorifique au moins à l'habitacle du véhicule. A cet effet, la boucle principale peut être équipée de moyens de pilotage de circulation du fluide frigorigène pour distribuer la circulation du fluide frigorigène à travers les équipements à réguler thermiquement, notamment l'échangeur thermique d'habitacle.

En outre, dans le cas des véhicules électriques et hybrides rechargeables équipés de batterie de traction de haute tension, le véhicule est généralement équipé en outre d'un circuit secondaire de refroidissement 1003 dans lequel circule un fluide secondaire permettant de transférer une puissance thermique entre la batterie 103 et la boucle principale 1004 au moyen d'un échangeur thermique 106 (appelé également « chiller »). L'échangeur thermique 106 est un échangeur de type fluide caloporteur-fluide secondaire. Le circuit secondaire 1003 comprend une pompe hydraulique 104 faisant circuler le fluide secondaire 113, éventuellement de l'eau glycolée, à travers une plaque ou des tubes en contact avec la masse thermique de la batterie afin de puiser des calories qui sont ensuite évacuées par évaporation du fluide frigorigène dans l'échangeur thermique 106.

Le deuxième circuit 1002 comporte en outre des moyens de mesure 110, 111 de la température des fluides caloporteur 112, 113, tels des capteurs ou organe d'estimation de température. Les capteurs peuvent être positionnés en zone avant ZAV, tel le capteur 110, ou en zone arrière ZAR du circuit 1002 à proximité de la batterie 103, tel le capteur 111. La pompe 104 et le compresseur 105 peuvent être contrôlés par l'unité électronique de commande BMS (« Battery Management system ») de la batterie ou par une unité électronique de contrôle différente, par exemple l'unité de contrôle de la machine électrique motrice 54, ou du moteur thermique le cas échéant.

En se référant aux figures 1 à 3 pour la description du procédé de diagnostic et du procédé de protection selon l'invention, le circuit électrique de propulsion avec au moins la machine électrique motrice 54 et la batterie 103 haute tension et son système de refroidissement 1001, 1002 forment un ensemble contrôlé par une unité électronique de contrôle 5. Un tel système de refroidissement est dit basse température en comparaison avec un système de refroidissement d'un moteur thermique dont la température du fluide caloporteur est plus élevée et qui est dit haute température.

Le procédé de diagnostic d'une anomalie de fonctionnement vise à détecter les cas de surchauffe des circuits électriques 100 à 103, ainsi que les situations d'anomalie pouvant résulter d'un dysfonctionnement des moyens de mesure de température. Le procédé de diagnostic a pour objectif de détecter spécifiquement cette dernière situation.

Plus précisément, il est prévu que le procédé de diagnostic détermine un seuil inférieur 426, et préférentiellement un seuil supérieur 412. Ce dernier seuil étant mis en oeuvre par l'unité de commande pour la détection des surchauffes du système de refroidissement.

Le cas de diagnostic des surchauffes ne sera pas décrit en détail dans cette description, mais une présentation résumée du concept est tout de même fournie pour la compréhension globale du procédé de diagnostic pouvant être mis en oeuvre par l'ensemble. Le procédé de diagnostic des surchauffes consiste à comparer à une étape 413, la température mesurée 410 du fluide caloporteur 61 du premier circuit de refroidissement 1001 avec le seuil supérieur 412, quand la température mesurée 410 est supérieure au seuil supérieur, le bloc 413 active l'état haut (VRAI) d'un signal booléen et par conséquent il est effectué une étape de diagnostic 200 du système de refroidissement comme étant en surchauffe. De préférence, le seuil 412 est dépendant d'un seuil configurable 411 et de températures mesurées 406 à 409 d'éléments électriques, tels la machine motrice 54, et les éléments électriques 100 à 102. D'autres variantes de détermination du seuil 412 sont néanmoins envisageables sans sortir du cadre de l'invention. L'étape de diagnostic 200 s'effectue si la détection reste active durant une temporisation 429 d'une durée prédéterminée, par exemple 120 secondes.

Plus précisément, l'invention consiste à détecter les cas d'anomalie de fonctionnement du système de refroidissement pouvant résulter d'une panne du moyen de mesure 60 de la température du fluide caloporteur 61 du circuit 1001.

A cet effet, le procédé de diagnostic comporte une étape de mesure 421 d'une première température 422 et d'une deuxième température 423 de fluide caloporteur, dans respectivement les premier 1001 et deuxième 1002 circuits de refroidissement, une étape d'estimation d'une température pondérée 424 qui est déterminée à partir d'un calcul barycentrique des première et deuxième températures mesurées 422, 423. Un premier et un deuxième coefficient sont assignés respectivement aux températures 422, 423. Les coefficients sont configurés, par exemple, pour une température 422 à 10°C, et pour une température 423à 60°C, de manière à calculer une température pondérée 424 de 20°C par exemple. Dautres valeurs de coefficients sont néanmoins envisageables.

La température 422 est identique à la température 410 et relevée à partir du même capteur.

La deuxième température 423 peut être la température du fluide caloporteur 113 du circuit de refroidissement 1003, la température du fluide caloporteur 112 du circuit 1004, ou bien encore une température composée du fluide caloporteur 113 et du fluide 112. La température pondérée 424 vise à prendre en compte la température 423 du circuit 1002 car celle-ci est plus stable par rapport à la température 422 de sorte à consolider et fiabiliser la donnée de température servant au diagnostic du système de refroidissement pour l'opération du diagnostic. En particulier, la fiabilité est améliorée pour les situations de temps froid à température négative (-15°C par exemple) et de sortie de garage où la température d'environnement du véhicule est d'environ 20°C.

Le procédé comporte ensuite une étape de détermination du seuil 426 consistant à calculer le minimum entre, d'une part, une température extérieure 425 dans un environnement extérieur du véhicule et, d'autre part, la deuxième température 423 du deuxième circuit 1002, puis une étape de comparaison 427 de la température pondérée 424 avec ledit seuil 426.

En cas de détection que la température pondérée 424 est inférieure audit seuil 426, le bloc 427 active l'état haut (VRAI) d'un signal booléen. Par conséquent, le procédé active une étape de diagnostic 200 d'anomalie de fonctionnement du système de refroidissement. Le diagnostic 200 est actif si le signal en sortie du bloc 427, ou (référencé 430) et si le signal en sortie du bloc 413, le cas échéant, est (sont) actif(s), c'est-à-dire à l'état booléen VRAI et que les conditions d'activation de la surveillance du diagnostic soient toujours présentes (bloc 209).

Dans une variante préférentielle, le procédé contrôle en outre l'état d'activation de la pompe hydraulique 104 du deuxième circuit de refroidissement 1002 pour s'assurer de l'état de circulation régulière du fluide caloporteur, c'est-à-dire pilotée avec un ratio du signal de commande non nul. Par conséquent, le procédé consiste à exécuter l'activation de l'étape de diagnostic d'anomalie 200 en cas de détection en outre de l'activation 428, (bloc à état haut ou VRAI), de la pompe de circulation du fluide caloporteur du deuxième circuit de refroidissement 1002. Cette étape de contrôle supplémentaire vise à garantir la mesure d'une température homogène dans le circuit 1002.

Ainsi, le bloc 431 (illustré par le symbole &), ajouté dans cette variante préférentielle, active alors l'état haut (VRAI) d'un signal booléen si les deux blocs à la fois 427 et 428 sont à l'état haut. Dans les cas contraires, le bloc 431 pilote un état bas (FAUX) de désactivation du diagnostic.

L'anomalie de fonctionnement est l'observation d'une température du fluide caloporteur 61 sur le circuit de refroidissement 1001 qui est inférieure au minimum composé de la température d'air extérieure 425 et de la température du fluide de refroidissement de la batterie. Cette situation est impossible et ne peut être le résultat que d'une défaillance du capteur de température d'eau 60.

En cas de détection du diagnostic 200, des mesures préventives sont appliquées visant à piloter des modes dégradés pour tenter de refroidir le circuit dans l'éventuel cas d'une surchauffe, car dans cette situation, l'unité de commande n'est pas capable de connaître quelle est la température réelle du fluide caloporteur.

Comme cela est illustré par la figure 3, de préférence, identiquement au diagnostic de surchauffe, l'étape de diagnostic 200 s'effectue si la détection reste active durant la temporisation 429 d'une durée prédéterminée.

Par ailleurs, il est établi de préférence des conditions préalables 400 à 402 de mise en oeuvre du diagnostic 200.

Une première condition 400 concerne l'activation de la pompe du circuit de refroidissement basse température, une deuxième condition 401 l'opérationnalité du capteur de température, et une troisième condition 402 la stabilité des températures 425 de l'environnement extérieur, et des températures 422, 423 des fluides caloporteurs du système de refroidissement.

La première condition 400 a pour fonction de contrôler la circulation du fluide 61 comme étant régulière dans le circuit 1001, ou consiste à vérifier s'il n'y a pas de défaut électrique au niveau de la pompe 64, par exemple détection de circuit ouvert, court-circuit à la borne positive, ou court-circuit à la borne de masse.

La deuxième condition 401 est un relevé de la température 422 de fluide effectué par le capteur de température 60 contrôlé comme opérationnel, ou consiste à vérifier s'il n'y a pas de défaut électrique au niveau du capteur 60, par exemple détection de circuit ouvert, court-circuit à la borne positive, ou court-circuit à la borne de masse.

La troisième condition 402 a pour fonction de contrôler la stabilité des températures mesurées depuis une durée supérieure (temporisation 403) à des seuils de temps minimal prédéterminés, les températures étant la première température 422 du fluide 61 dans le circuit 1001, la deuxième température 423 d'un fluide dans le circuit 1002 et la température extérieur 425.

L'étape de comparaison 427, ou les étapes de comparaison 427 et 431, et/ou 413 le cas échéant, du procédé de diagnostic peut/peuvent s'effectuer après une temporisation 429 d'une durée prédéterminée, et de préférence lorsque les conditions d'activation (400 à 402) de la surveillance 209 du diagnostic sont toujours présentes après la temporisation 403.

Il est en effet nécessaire d'avoir une température d'air extérieur et des températures de fluide caloporteur sur le circuit basse température 1001 et très basse température 1002 qui soient suffisamment stables 402 lors de l'activation du diagnostic afin d'éviter toutes fausses détections. Une fausse détection peut se produire par exemple lors d'un passage dans un tunnel ou une sortie de garage, sans que cela soit limitatif.

Par exemple, un véhicule automobile, garé à l'extérieur par temps froid avec une température d'air extérieur à -5°C présente à son démarrage une température d'air extérieur égale à la température des fluides caloporteur 422, 423 et aussi égale à la température la plus chaude d'un des éléments du circuit de propulsion électrique, ces températures étant égales à -5°C.

Quand le véhicule automobile roule et rentre dans un tunnel ou dans un parking sous-terrain, la température d'air extérieur peut passer de -5°C à 10°C/15°C instantanément, alors que les températures de fluide caloporteur et d'un des éléments du circuit la plus haute n'ont augmenté que seulement lentement compte tenu de l'inertie matière des éléments.

Particulièrement, si la distance parcourue est faible, il y a donc un risque d'avoir la température d'air extérieur alors provisoirement en vigueur supérieure à une température de fluide elle-même supérieure à la température la plus haute d'un des éléments du circuit électrique de propulsion. Ceci donnera un faux diagnostic et est à éviter.

Il est donc préférable de réaliser ce diagnostic uniquement lorsque la température d'air extérieur est stable 402, pour avoir une détection fiable d'anomalie au niveau du système de refroidissement du circuit électrique de propulsion.

Lorsque les conditions préalables 400 à 402 sont détectées et lorsqu'une anomalie de fonctionnement 200 est diagnostiquée, franchissement du seuil inférieur, et avec la pompe 104 activée en régime tournant, ou franchissement du seuil supérieur, il est procédé à l'activation des mesures de protection ou modes dégradés de fonctionnement, référencée 404 en figure 3.

L'invention concerne également le procédé de protection d'un circuit électrique refroidi par un système de refroidissement par fluide caloporteur dans un véhicule automobile. Le procédé de protection intègre le procédé de diagnostic selon l'un quelconque des modes de réalisation décrit précédemment, c'est-à-dire qu'il est procédé à l'activation 209 d'une surveillance 202 de la température du système de refroidissement pour détecter une anomalie de fonctionnement du capteur de température du circuit de refroidissement 1001.

En référence à la figure 3, pour la mise en oeuvre du diagnostic il est procédé à une étape de comparaison 427 de la température pondérée estimée 424 avec le seuil inférieur 426, et en cas de détection que la température pondérée 424 est inférieure audit seuil inférieur 426 avec la pompe 104 activée en régime tournant, il est procédé à une étape d'activation de diagnostic 200 d'anomalie de fonctionnement du système de refroidissement.

Quand il est activé le diagnostic d'anomalie du système de refroidissement, il est effectué des mesures spécifiques de protection visant à piloter des modes dégradés afin de protéger l'ensemble électrique du véhicule et de mettre fin à l'anomalie de fonctionnement, qui dans le cas de l'invention est une température incohérente du fluide caloporteur 61.

Parmi ces mesures, l'unité électronique de contrôle 5 pilote au moins une augmentation 201 d'un débit du fluide 61 dans le système de refroidissement avec une émission d'une alerte 208 à destination du conducteur du véhicule. Cette augmentation 201 peut être régulée et de différents niveaux et est pilotée de préférence à la vitesse maximale.

Parallèlement, il peut être alors procédé à l'envoi d'une alerte 203 vers une unité électronique de contrôle moteur 6 comportant un calculateur 204 et des moyens d'émission de demandes de mesures de protection auxiliaires vers le circuit électrique de propulsion et vers des organes 205 collaborant avec le circuit électrique.

Une mesure de protection auxiliaire est une suspension de tout rechargement électrique du circuit, un tel rechargement dégageant de la chaleur, ou comme un freinage récupératif 207 d'énergie par envoi d'une information vers le correcteur électronique de trajectoire indiquant une suspension de freinages récupératifs.

Ces mesures 201, 207 sont les mesures d'urgence prises immédiatement à la suite d'une détection d'une anomalie de fonctionnement ou surchauffe mais peuvent se révéler insuffisantes. Dans ce cas, quand l'augmentation 201 du débit de fluide ou la suspension de tout rechargement électrique du circuit 207 ne sont pas suffisantes pour ramener la température relevée du fluide comprise entre le seuil inférieur 426 et le seuil supérieur 413, il peut être effectué, pour un véhicule hybride, un arrêt au moins partiel 206 de ladite au moins une machine électrique 54 et un redémarrage d'un moteur thermique pour une propulsion du véhicule hybride.

Pour un véhicule électrique, il peut être effectué une émission d'une alerte 208 urgente d'arrêt du véhicule automobile à destination du conducteur du véhicule automobile et/ou un arrêt au moins partiel, jusqu'à total, 206 d'au moins une machine électrique 54 du circuit quand plusieurs machines électriques 54 sont présentes dans le circuit.

Dans le cas d'un véhicule automobile électrique, la machine électrique 54 pour un circuit électrique de propulsion ne comportant qu'une machine électrique 54 ou toutes les machines électriques du circuit électrique de propulsion dans le cas d'un circuit comportant plusieurs machines électriques 54 ne peuvent pas être arrêtées entièrement.

Il est possible de continuer la propulsion du véhicule hybride ou électrique en pilotant la ou les machines électriques 54 pour qu'elles dégagent moins de chaleur.

Conformément au procédé de protection en référence à la figure 2, l'activation de la surveillance 209 lorsque les conditions préalables de mise en oeuvre du diagnostic sont détectées, soit les conditions 400 à 402 concernant, une absence de défaut électrique sur la pompe du circuit 1001, l'opérationnalité du capteur de température 60, et la stabilité des températures 425 de l'environnement extérieur 425, et des températures 422, 423 des fluides caloporteurs du système de refroidissement déjà décrit en figure 3.

En se référant à toutes les figures, l'invention concerne aussi un ensemble, dans un véhicule automobile, d'un circuit électrique et de son système de refroidissement par fluide caloporteur comportant au moins un organe de mesure 60, 110, 111 ou d'estimation d'une température du fluide, avantageusement un capteur de température.

Le circuit électrique comprend au moins une machine électrique 54 de propulsion du véhicule et au moins un élément électrique 100 à 102 associé à ladite au moins une machine électrique 54 à refroidir, une liste des éléments électriques potentiels ayant été précédemment donnée.

L'ensemble comprend une unité électronique de contrôle 5 en charge de son fonctionnement et est protégé par un procédé de protection tel que précédemment décrit.

Pour ce faire, l'unité électronique de contrôle 5 comprend des moyens de réception des températures du fluide mesurées, avantageusement par les capteurs de température 60, 110, 111, des moyens de mémorisation des seuils inférieur 427 et supérieur 413.

L'unité électronique de contrôle 5 comprend aussi des moyens de mémorisation de coefficient de pondération assignés à chaque température 422, 423, des moyens d'estimation de la température pondérée 424 à partir des coefficients de pondération et d'un calcul barycentrique, des moyens de comparaison de la température pondérée 424 avec le seuil inférieur 427 et des moyens d'établissement d'un diagnostic d'un système de refroidissement présentant une anomalie. Dans ce cas, étant en présence d'une incertitude concernant la valeur de la température du fluide caloporteur dans le circuit basse température, l'unité électronique de contrôle 5 active des moyens d'augmentation 201 du débit de fluide dans le système de refroidissement, des moyens d'émission d'une alerte 208 visuelle ou sonore à destination du conducteur et des moyens de suspension de tout rechargement électrique du circuit comme un freinage récupératif 207 d'énergie, en tant que mesures de protection de base.

L'unité électronique de contrôle 5 de l'ensemble comprend des moyens d'émission d'une demande d'arrêt au moins partiel 206, jusqu'à l'arrêt total, de ladite au moins une machine électrique 54 vers une unité électronique de contrôle principal 6, aussi dénommée unité de contrôle moteur, d'un véhicule automobile hybride avec des moyens de remise en marche du moteur thermique du véhicule ou des moyens de demande urgente d'arrêt au moins partiel 206 de ladite au moins une machine électrique 54 pour un véhicule automobile électrique, ceci vers l'unité électronique de contrôle principal 6, aussi dénommée unité de contrôle moteur.

L'unité électronique de contrôle 5 de l'ensemble peut commander des moyens d'actionnement des volets 1 d'aération en une position d'ouverture maximale quand les moyens d'augmentation 201 du débit de fluide sont activés.

La présente invention se destine aussi bien à un véhicule automobile électrique qu'à un véhicule automobile hybride.

Les unités électroniques de contrôle 5 et 6 sont munies d'un calculateur à circuits intégrés et de mémoires électroniques, les calculateurs et les mémoires étant couplés et configurés pour coopérer ensemble et exécuter le procédé de diagnostic et de protection selon l'invention. Mais cela n'est pas obligatoire. En effet, les calculateurs pourraient être configurés sous une unique unité de commande centralisée. Par conséquent, une unité de contrôle, selon l'invention, peut être réalisée sous la forme de modules logiciels (ou informatiques (ou encore « software »)), ou bien de circuits électroniques (ou « hardware »), ou encore d'une combinaison de circuits électroniques et de modules logiciels.

La figure 4, en se référant aussi à la figure 1, montre différentes courbes obtenues lors de la mise en oeuvre du procédé selon la présente invention.

Dans le premier graphique GR1, il est montré l'évolution des domaines de validité concernant les températures d'air extérieur 425, de fluide du circuit de refroidissement 422 de la machine électrique, dit circuit basse température, et de fluide 423 du circuit de refroidissement de la batterie, ces courbes se confondant temporairement. Les domaines de validités sont calculés à partir de l'évolution des températures d'air extérieur 425 sur le graphique GR3 et de l'évolution de la température 422 du fluide du circuit basse température et du circuit de refroidissement de la batterie 423 sur le graphique GR4. Ils permettent d'identifier les zones où des changements de températures brusques s'opèrent, afin d'éviter toute fausse détection au niveau du diagnostic. Les domaines de validités sont indiqués par des signaux booléens, ayant la valeur 1 (VRAI) quand les températures sont stables et la valeur 0 (FAUX) en cas d'instabilité, c'est-à-dire de variation rapide en termes de valeur de température.

Sur le graphique GR2, aucun défaut n'est relevé ni sur la pompe à eau du circuit de refroidissement basse température, ni sur le capteur de température du fluide basse température. Les doubles flèches représentent l'activation de la surveillance quand les conditions préalables sont détectées (stabilités des températures de fluide et extérieur, activation pompe, fonctionnement régulier capteur). Toutes les conditions sont réunies pour assurer une détection correcte d'une anomalie de fonctionnement.

Sur le graphique GR4, la température du fluide 422 (en pointillés courts) et la température du fluide 423 (trait plein) sont représentées. La température pondérée 424 est représentée en pointillés longs et est calculée en fonction de coefficients de pondération attribué à chaque température de fluide 422, 423. Par exemple, à t=700s, la température 422 est égale à 10°C, la température 423 est égale à 60°C et la température pondérée 424 est égale à 20°C.

Sur le graphique GR5, on définit le calcul du seuil inférieur 426 qui est égal au minimum entre la température d'air extérieur 425 et la température du fluide du circuit de refroidissement 423. Comme cela est visible sur le graphique, à t=700s, la température d'eau 423 est égale à 60°C, la température d'air extérieur à 40°C. Le seuil inférieur 426 est donc égal à 40°C.

Sur le graphique GR6, le procédé détecte une défaillance aux instants où la température du fluide 424 devient inférieure au seuil inférieur 426 et la pompe du circuit de refroidissement de la batterie est active, (signal 428 à l'état VRAI), comme cela est visible sur le graphique GR7. Les instants de détection DT1, DT2 sont renseignés par des doubles flèches sur GR6 et des flèches illustrent les relations d'activation de ces instants avec le graphique GR8.

Sur le graphe GR8, une temporisation de 120s, par exemple, s'enclenche alors à partir des instants de détection DT1, DT2 et le défaut est diagnostiqué au bout de cette durée de temporisation si la défaillance est toujours active après cette temporisation. Le signal DG passe à l'état VRAI (1), pour DT2 seulement dans cet exemple, (diagnostic activé) et indique une détection d'une température pondérée 424 qui est inférieure au seuil 426, et avec la condition 428 vérifiée (GR7), ainsi que les conditions préalables 400 à 402 correctement remplies (GR2). Une ou des mesures de protections ou modes dégradés mentionnées précédemment sont déclenchées quand le signal DG de diagnostic est activé.

Le signal DG de diagnostic est désactivé à partir du moment où l'on observe une température pondérée 424 qui devient supérieure au seuil inférieur, tout en restant inférieure au seuil supérieur, OU en cas de détection d'une absence d'activation de la pompe à eau du circuit de refroidissement de la batterie, OU que les conditions préalables d'activation ne sont plus réunies, c'est à dire que les températures de fluide caloporteur ou d'air extérieur qui deviennent instables, OU en cas de détection de défaut sur la pompe à eau ou sur le capteur de température d'eau du circuit basse température.

## Revendications

1. Procédé de diagnostic d'une anomalie de fonctionnement d'un système de refroidissement par fluide caloporteur dans un véhicule automobile d'un circuit électrique comprenant au moins une machine électrique (54) de propulsion du véhicule, une batterie (103) prévue pour l'alimentation de la machine électrique (54), le système de refroidissement comportant un premier circuit de refroidissement (1001) de la machine électrique (54) et un deuxième circuit de refroidissement (1002) de ladite batterie (103), le procédé comportant une étape de mesure (421) d'une première et d'une deuxième température de fluide caloporteur (422, 423) dans respectivement les premier et deuxième circuits de refroidissement (1001, 1002) et une étape de détermination d'un seuil inférieur de température (426), le procédé étant **caractérisé en ce qu'**il comporte en outre :
- Une étape d'estimation d'une température pondérée (424) qui est déterminée à partir d'un calcul barycentrique des première et deuxième températures mesurées (422, 423),
- La détermination du seuil (426) consistant à calculer le minimum entre, d'une part, une température extérieure (425) dans un environnement du véhicule et, d'autre part, la deuxième température (423),
- Une étape de comparaison (427) de la température pondérée (424) avec ledit seuil (426),
- En cas de détection que la température pondérée (424) est inférieure audit seuil (426), l'activation d'une étape de diagnostic (200) d'anomalie de fonctionnement du système de refroidissement.

2. Procédé selon la revendication 1, **caractérisé en ce que** l'activation de l'étape de diagnostic d'anomalie est exécutée en cas de détection en outre d'une activation d'une pompe (428) de circulation du fluide caloporteur du deuxième circuit de refroidissement (1002).

3. Procédé selon la revendication 1 ou 2, **caractérisé en ce qu'**il est établi des conditions préalables (209) de mise en oeuvre du diagnostic, les conditions préalables étant au moins des températures stables (402) depuis une durée supérieure à des seuils de temps minimal prédéterminés, les températures étant la première température (422), la deuxième température (423), la température extérieur (425).

4. Procédé selon l'une quelconque des revendications 1 à 3, **caractérisé en ce que** l'étape de diagnostic (200) s'effectue si la détection reste active durant une temporisation (429) d'une durée prédéterminée.

5. Procédé de protection d'un circuit électrique refroidi par un système de refroidissement par fluide caloporteur dans un véhicule automobile, **caractérisé en ce qu'**il intègre un procédé de diagnostic selon l'une quelconque des revendications 1 à 4 et, quand il est effectué un diagnostic d'anomalie du système de refroidissement, la température pondérée (424) étant inférieure audit seuil (426), il est effectué une augmentation (201) d'un débit du fluide dans le système de refroidissement avec une émission d'une alerte (208) à destination du conducteur du véhicule et une suspension de tout rechargement électrique du circuit comme un freinage récupératif (207) d'énergie.

6. Procédé de protection selon la revendication 5, **caractérisé en ce que**, quand l'augmentation (201) du débit de fluide ou la suspension de tout rechargement électrique du circuit (207) ne sont pas suffisantes pour ramener la température pondéré (424) au-dessus dudit seuil (426), il est effectué, pour un véhicule hybride, un arrêt au moins partiel (206) de ladite au moins une machine électrique (54) et un redémarrage d'un moteur thermique pour une propulsion du véhicule hybride, ou, pour un véhicule électrique, à une émission d'une alerte (208) urgente d'arrêt du véhicule automobile à destination du conducteur du véhicule automobile et/ou à un arrêt au moins partiel (206) d'au moins une machine électrique (54) du circuit quand plusieurs machines électriques (54) sont présentes dans le circuit.

7. Ensemble, dans un véhicule automobile, d'un circuit électrique et de son système de refroidissement par fluide caloporteur comportant au moins un organe de mesure ou d'estimation d'une première et deuxième température de fluide (422, 423), le circuit électrique comprenant au moins une machine électrique (54) de propulsion du véhicule et au moins un élément électrique (100 à 103) associé à ladite au moins une machine électrique (54) à refroidir, l'ensemble comprenant une unité électronique de contrôle (5) en charge de son fonctionnement, **caractérisé en ce que** l'ensemble est protégé par un procédé selon l'une quelconque des revendications 5 et 6, et **en ce que** l'unité électronique de contrôle (5) comprend des moyens de réception de la première et deuxième température de fluide (422, 423) mesurées, des moyens d'estimation de la température pondérée (424), des moyens de mémorisation du seuil (426), des moyens de comparaison de la température pondérée avec le seuil (426), des moyens d'établissement d'un diagnostic d'une anomalie du système de refroidissement et, dans ce cas, des moyens d'augmentation (201) du débit de fluide dans le système de refroidissement, des moyens d'émission d'une alerte (208) visuelle ou sonore à destination du conducteur et des moyens de suspension de tout rechargement électrique du circuit comme un freinage récupératif (207) d'énergie.

8. Ensemble selon la revendication 7, **caractérisé en ce que** l'unité électronique de contrôle (5) de l'ensemble comprend des moyens d'émission d'une demande d'arrêt au moins partiel (206) de ladite au moins une machine électrique (54) vers une unité électronique de contrôle principal (6) d'un véhicule automobile hybride avec des moyens de remise en marche du moteur thermique du véhicule ou des moyens de demande urgente d'arrêt au moins partiel (206) de ladite au moins une machine électrique (54) pour un véhicule automobile électrique.

9. Ensemble selon l'une quelconque des revendications 7 à 8, **caractérisé en ce que** ledit au moins un élément électrique (100 à 103) est sélectionné parmi les éléments suivants pris unitairement ou en combinaison : au moins un onduleur (100, 102), au moins un dispositif de rechargement électrique embarqué dans le véhicule automobile, au moins un convertisseur (101) de courant continu haute tension en courant continu basse tension et au moins une batterie (103), le système de refroidissement comprenant au moins un premier circuit (1001) de refroidissement dudit au moins un élément électrique (100 à 102) comportant une première pompe (64) et au moins un radiateur (58) faisant partie ou non d'un groupe moto-ventilateur (7) avec des volets (1) d'aération pilotés, l'unité électronique de contrôle (5) commandant des moyens d'actionnement des volets (1) d'aération en une position d'ouverture maximale quand les moyens d'augmentation (201) du débit de fluide sont activés, et un deuxième circuit (1002) de refroidissement de la batterie (103) comportant un circuit principal de régulation thermique (1004), de type boucle à cycle thermodynamique, un circuit secondaire (1003) comprenant une deuxième pompe (104) et un échangeur thermique (106) permettant l'échange d'énergie calorifique entre le circuit principal (1004) et le circuit secondaire (1003).

10. Véhicule automobile électrique ou hybride, **caractérisé en ce qu'**il comprend un ensemble d'un circuit électrique et de son système de refroidissement par fluide caloporteur selon l'une quelconque des revendications 7 à 9.

## Patentansprüche

1. Verfahren zur Diagnose einer Betriebsstörung eines Kühlmittelkühlsystems in einem Kraftfahrzeug eines Stromkreises, der mindestens eine elektrische Maschine (54) zum Antrieb des Fahrzeugs, eine zur Versorgung der elektrischen Maschine (54) vorgesehene Batterie (103) und die Kühlung umfasst System, das einen ersten Kühlkreislauf (1001) für die elektrische Maschine (54) und einen zweiten Kühlkreislauf (1002) für die Batterie (103) umfasst, wobei das Verfahren einen Schritt des Messens (421) einer ersten und einer zweiten Wärmeübertragungsflüssigkeitstemperatur umfasst (422, 423) im ersten bzw. zweiten Kühlkreislauf (1001, 1002) und einen Schritt zur Bestimmung einer unteren Temperaturschwelle (426), wobei das Verfahren **dadurch gekennzeichnet ist, dass** es weiterhin Folgendes umfasst:
- Ein Schritt zum Schätzen einer gewichteten Temperatur (424).
bestimmt aus einer Schwerpunktberechnung des ersten und zweiten gemessene Temperaturen (422, 423),
- Die Bestimmung des Schwellenwerts (426), die einerseits darin besteht, das Minimum zwischen zu berechnen, eine Außentemperatur (425) in einer Umgebung des Fahrzeugs und andererseits die zweite Temperatur (423),
- einen Vergleichsschritt (427) der gewichteten Temperatur (424) mit dem Schwellenwert (426).
- Im Falle der Feststellung, dass die gewichtete Temperatur (424) niedriger als der Schwellenwert (426) ist, die Aktivierung eines Diagnoseschritts (200) einer Betriebsanomalie des Kühlsystems.

2. Verfahren nach Anspruch 1, **dadurch gekennzeichnet, dass** die Aktivierung des Schritts der Anomaliediagnose im Falle der Erkennung zusätzlich zu einer Aktivierung einer Pumpe (428) zur Umwälzung der Wärmeübertragungsflüssigkeit des zweiten Kühlkreislaufs (1002) erfolgt.

3. Verfahren nach Anspruch 1 oder 2, **dadurch gekennzeichnet, dass** Vorbedingungen (209) zur Durchführung der Diagnose festgelegt werden, wobei die Vorbedingungen mindestens stabile Temperaturen (402) für eine Dauer größer als Zeitschwellen vorgegebener Mindestwerte sind, wobei es sich bei den Temperaturen um die erste Temperatur ( 422), die zweite Temperatur (423), die Außentemperatur (425).

4. Verfahren nach einem der Ansprüche 1 bis 3, **dadurch gekennzeichnet, dass** der Diagnoseschritt (200) durchgeführt wird, wenn die Erkennung während einer Zeitverzögerung (429) von vorgegebener Dauer aktiv bleibt.

5. Verfahren zum Schutz eines durch ein Kühlsystem mit Wärmeübertragungsflüssigkeit gekühlten Stromkreises in einem Kraftfahrzeug, **dadurch gekennzeichnet, dass** es ein Diagnoseverfahren nach einem der Ansprüche 1 bis 4 umfasst und, wenn eine Diagnose einer Anomalie des Kühlsystems vorliegt, die Wenn die gewichtete Temperatur (424) niedriger als der Schwellenwert (426) ist, wird eine Erhöhung (201) der Durchflussrate des Fluids im Kühlsystem mit der Ausgabe einer Warnung (208) für den Fahrer des Fahrzeugs durchgeführt und eine Aussetzung jeglicher elektrischer Aufladung des Stromkreises, wie z. B. regeneratives Bremsen (207) von Energie.

6. Schutzverfahren nach Anspruch 5, **dadurch gekennzeichnet, dass**, wenn der Anstieg (201) des Flüssigkeitsflusses oder die Unterbrechung jeglicher elektrischer Aufladung des Schaltkreises (207) nicht ausreicht, um die gewichtete Temperatur (424) über den genannten Schwellenwert zu bringen (426), eine zumindest teilweise Abschaltung (206) der mindestens einen elektrischen Maschine (54) und ein Neustart einer Wärmekraftmaschine zum Antrieb des Hybridfahrzeugs wird durchgeführt, für ein Hybridfahrzeug oder für ein Elektrofahrzeug, zu einer Ausgabe einer für den Fahrer des Kraftfahrzeugs bestimmten Warnung vor einem dringenden Kraftfahrzeugstopp (208) und/oder zu einem zumindest teilweisen Stopp (206) mindestens einer elektrischen Maschine (54) des Stromkreises, wenn mehrere elektrische Maschinen ( 54) im Stromkreis vorhanden sind.

7. Anordnung eines elektrischen Kreislaufs und seines Wärmeübertragungsflüssigkeitskühlsystems in einem Kraftfahrzeug, umfassend mindestens ein Element zum Messen oder Schätzen einer ersten und zweiten Flüssigkeitstemperatur (422, 423), wobei der elektrische Kreislauf mindestens eine elektrische Maschine umfasst ( 54) zum Antrieb des Fahrzeugs und mindestens ein elektrisches Element (100 bis 103), das mit der mindestens einen zu kühlenden elektrischen Maschine (54) verbunden ist, wobei die Baugruppe eine elektronische Steuereinheit (5) umfasst, die für ihren Betrieb verantwortlich ist, **dadurch gekennzeichnet, dass** die Baugruppe durch ein Verfahren nach einem der Ansprüche 5 und 6 geschützt ist und dass die elektronische Steuereinheit (5) Mittel zum Empfangen der gemessenen ersten und zweiten Fluidtemperatur (422, 423) und Mittel zum Schätzen der gewichteten Temperatur umfasst (424), Mittel zum Speichern des Schwellenwerts (426), Mittel zum Vergleichen der gewichteten Temperatur mit dem Schwellenwert (426), Mittel zum Erstellen einer Diagnose einer Anomalie im Kühlsystem und in diesem Fall Mittel zum Erhöhen (201) die Strömungsgeschwindigkeit der Flüssigkeit im Kühlsystem, Mittel zur Ausgabe einer visuellen oder akustischen Warnung (208) für den Fahrer und die Mittel zum Aussetzen jeglicher elektrischer Wiederaufladung des Kreislaufs, wie z. B. regeneratives Bremsen (207), mit Energie.

8. Baugruppe nach Anspruch 7, **dadurch gekennzeichnet, dass** die elektronische Steuereinheit (5) der Baugruppe Mittel zum Übertragen einer Anforderung zum zumindest teilweisen Stoppen (206) der mindestens einen elektrischen Maschine (54) an eine elektronische Hauptsteuereinheit umfasst (6) eines Hybridkraftfahrzeugs mit Mitteln zum Neustarten des Wärmemotors des Fahrzeugs oder Mitteln zum dringenden Anfordern einer zumindest teilweisen Abschaltung (206) der mindestens einen elektrischen Maschine (54) für ein Elektrokraftfahrzeug.

9. Baugruppe nach einem der Ansprüche 7 bis 8, **dadurch gekennzeichnet, dass** das mindestens eine elektrische Element (100 bis 103) aus den folgenden Elementen einzeln oder in Kombination ausgewählt ist: mindestens ein Wechselrichter (100, 102), at at mindestens ein elektrisches Ladegerät an Bord des Kraftfahrzeugs, mindestens einen Wandler (101) von Hochspannungsgleichstrom in Niederspannungsgleichstrom und mindestens eine Batterie (103). wobei das Kühlsystem mindestens einen ersten Kreislauf (1001) zum Kühlen des mindestens einen elektrischen Elements (100 bis 102) umfasst, das eine erste Pumpe (64) und mindestens einen Kühler (58) umfasst, der Teil einer Motorradgruppe ist oder nicht - Lüfter (7) mit gesteuerten Lüftungsklappen (1), wobei die elektronische Steuereinheit (5) Mittel zum Betätigen der Lüftungsklappen (1) in eine maximal geöffnete Position steuert, wenn die Mittel zur Erhöhung (201) des Fluidstroms aktiviert sind, und a Zweiter Kreislauf (1002) zum Kühlen der Batterie (103), umfassend einen Hauptwärmeregulierungskreislauf (1004) vom Typ thermodynamischer Zyklusschleife, einen Sekundärkreislauf (1003), der eine zweite Pumpe (104) und einen Wärmetauscher (106) umfasst der Austausch von Wärmeenergie zwischen dem Hauptkreislauf (1004) und dem Sekundärkreislauf (1003).

10. Elektro- oder Hybridkraftfahrzeug, **dadurch gekennzeichnet, dass** es eine Baugruppe aus einem Stromkreis und seinem Kühlsystem durch Wärmeübertragungsflüssigkeit nach einem der Ansprüche 7 bis 9 umfasst.

## Claims

1. Method for diagnosing an operating anomaly of a coolant cooling system in a motor vehicle of an electric circuit comprising at least one electric machine (54) for propelling the vehicle, a battery (103) provided for supplying the electric machine (54), the cooling system comprising a first cooling circuit (1001) for the electric machine (54) and a second cooling circuit (1002) for the said battery (103), the method comprising a step measuring (421) a first and a second heat transfer fluid temperature (422, 423) in respectively the first and second cooling circuits (1001, 1002) and a step of determining a lower temperature threshold ( 426), the method being **characterized in that** it further comprises:
- A step of estimating a weighted temperature (424) which is
determined from a barycentric calculation of the first and second measured temperatures (422, 423),
- The determination of the threshold (426) consisting in calculating the minimum between, on the one hand, an outside temperature (425) in an environment of the vehicle and, on the other hand, the second temperature (423),
- A comparison step (427) of the weighted temperature (424) with said threshold (426).
- In the event of detection that the weighted temperature (424) is lower than said threshold (426), the activation of a diagnostic step (200) of an operating anomaly of the cooling system.

2. Method according to Claim 1, **characterized in that** the activation of the anomaly diagnosis step is carried out in the event of detection in addition of an activation of a pump (428) for circulating the heat transfer fluid of the second circuit of cooling (1002).

3. Method according to Claim 1 or 2, **characterized in that** preconditions (209) for carrying out the diagnosis are established, the preconditions being at least stable temperatures (402) for a duration greater than time thresholds predetermined minimums, the temperatures being the first temperature (422), the second temperature (423), the outside temperature (425).

4. Method according to any one of Claims 1 to 3, **characterized in that** the diagnostic step (200) is carried out if the detection remains active during a time delay (429) of a predetermined duration.

5. Method for protecting an electrical circuit cooled by a heat transfer fluid cooling system in a motor vehicle, **characterized in that** it incorporates a diagnostic method according to any one of Claims 1 to 4 and, when a diagnosis of an anomaly of the cooling system, the weighted temperature (424) being lower than said threshold (426), an increase (201) of a flow rate of the fluid in the cooling system is carried out with an emission of an alert ( 208) intended for the driver of the vehicle and a suspension of any electrical recharging of the circuit such as regenerative braking (207) of energy.

6. Protection method according to Claim 5, **characterized in that**, when the increase (201) in the flow of fluid or the suspension of any electrical recharging of the circuit (207) are not sufficient to bring the weighted temperature (424) above above said threshold (426), an at least partial shutdown (206) of said at least one electric machine (54) and a restart of a heat engine for propulsion of the hybrid vehicle is performed, for a hybrid vehicle, or, for an electric vehicle, to an emission of an urgent motor vehicle stop alert (208) intended for the driver of the motor vehicle and/or to an at least partial stop (206) of at least one electric machine ( 54) of the circuit when several electric machines (54) are present in the circuit.

7. Assembly, in a motor vehicle, of an electric circuit and of its heat transfer fluid cooling system comprising at least one member for measuring or estimating a first and second fluid temperature (422, 423), the electric circuit comprising at least one electric machine (54) for propelling the vehicle and at least one electric element (100 to 103) associated with said at least one electric machine (54) to be cooled, the assembly comprising an electronic control unit (5) responsible for its operation, **characterized in that** the assembly is protected by a method according to any one of Claims 5 and 6, and **in that** the electronic control unit (5) comprises means for receiving the first and second fluid temperature (422, 423) measured, means for estimating the weighted temperature (424), means for storing the threshold (426), means for comparing the weighted temperature with the threshold (426), means for establishing a diagnosis of an anomaly in the cooling system and, in this case, means for increasing (201) the flow rate of fluid in the cooling system, means for issuing an alert (208) visual or audible for the driver and the means for suspending any electrical recharging of the circuit such as regenerative braking (207) of energy.

8. Assembly according to Claim 7, **characterized in that** the electronic control unit (5) of the assembly comprises means for transmitting a request for at least partial stopping (206) of the said at least one electric machine ( 54) to a main electronic control unit (6) of a hybrid motor vehicle with means for restarting the heat engine of the vehicle or means for urgently requesting at least partial shutdown (206) of said at least one electric machine (54) for an electric motor vehicle.

9. Assembly according to any one of Claims 7 to 8, **characterized in that** the said at least one electrical element (100 to 103) is selected from the following elements taken individually or in combination: at least one inverter (100, 102), at at least one electrical charging device on board the motor vehicle, at least one converter (101) from high voltage direct current to low voltage direct current and at least one battery (103). the cooling system comprising at least a first circuit (1001) for cooling said at least one electrical element (100 to 102) comprising a first pump (64) and at least one radiator (58) forming part or not of a motorcycle group - fan (7) with controlled ventilation flaps (1), the electronic control unit (5) controlling means for actuating the ventilation flaps (1) in a maximum open position when the means of increase (201) of the fluid flow are activated, and a second circuit (1002) for cooling the battery (103) comprising a main thermal regulation circuit (1004), of the thermodynamic cycle loop type, a secondary circuit (1003 ) comprising a second pump (104) and a heat exchanger (106) allowing the exchange of heat energy between the main circuit (1004) and the secondary circuit (1003).

10. Electric or hybrid motor vehicle, **characterized in that** it comprises an assembly of an electrical circuit and of its cooling system by heat transfer fluid according to any one of Claims 7 to 9.
